# EUROPEAN PATENT APPLICATION

(11) **EP 4 752 403 A1**
(43) Date of publication of application: **03.06.2026**
(21) Application number: 24845591.7
(22) Date of filing: 22.07.2024
(51) Int. Cl.: F16J 15/3244, F16J 15/18, F16J 15/3204

(54) **SEAL RING**

(30) Priority: 27.07.2023 JP 2023122680
(71) Applicant: Eagle Industry Co., Ltd., Minato-ku Tokyo 105-8587 (JP)
(72) Inventor: GOTO, Kensaku, Tokyo 105-8587 (JP); OTA, Takafumi, Tokyo 105-8587 (JP)
(74) Representative: Patentquadrat Patentanwaltsgesellschaft mbH
(86) International application number: PCT/JP2024/026166
(87) International publication number: WO 2025/023215

(57) **Abstract**

There is provided a seal ring capable of maintaining parallelism between sliding surfaces. A seal ring includes a sliding surface 3a that slides relative to one of a shaft 1 and a housing 2 through which the shaft 1 is inserted; and an installation surface 3b that intersects the sliding surface 3a and that is installed on remaining one of the shaft 1 and the housing 2. The seal ring partitions one space H, which is located on a side opposite to a side on which the sliding surface 3a intersects the installation surface 3b, off from another space L disposed on the side on which the sliding surface 3a intersects the installation surface 3b. The sliding surface 3a is provided with a dynamic pressure generation mechanism 36 communicating with the one space H and including a dynamic pressure generation portion 39b, and a fluid recovery mechanism 37 disposed between the dynamic pressure generation portion 39b and the one space H.

## Description

### {TECHNICAL FIELD}

The present invention relates to a seal ring, for example, a seal ring used for sealing a gap between a shaft and a housing, particularly to a seal ring that is mounted and used in an annular groove, namely, a so-called stuffing box.

### {BACKGROUND ART}

As an example of a shaft sealing device that prevents leakage of a sealed fluid, there is a seal ring having an annular shape and disposed between a rotating shaft and a housing of a rotating machine. In such a seal ring, in recent years, reducing the loss of energy caused by sliding has been desired for environmental measures and the like.

For example, a seal ring described in Patent Citation 1 is fixed to a housing, and is loosely fitted into an annular groove, which is provided in a rotating shaft, so as to be rotatable, and a side surface of the seal ring and a side surface of the annular groove are slidable relative to each other.

In addition, an oil groove communicating with an oil chamber side and a wedge effect generation groove extending in a circumferential direction from the oil groove are provided on the side surface of the seal ring. When the rotating shaft rotates, hydraulic oil is taken in from an oil chamber through the oil groove, dynamic pressure is generated due to the wedge effect of the wedge effect generation groove, the side surface of the seal ring is lifted from the side surface of the annular groove, and an oil film is formed. Accordingly, the frictional force between the side surface of the seal ring and the side surface of the annular groove can be reduced.

### {CITATION LIST}

### {Patent Literature}

Patent Citation 1: JP H9-210211 A (Page 4, FIG. 4)

### {SUMMARY OF INVENTION}

### {Technical Problem}

In the seal ring of Patent Citation 1, the seal ring is disposed to protrude toward an outer diameter side beyond the annular groove of the rotating shaft, and dynamic pressure caused by the wedge effect generation groove is not generated at an outer diameter-side portion of the side surface of the seal ring. According to this configuration, since dynamic pressure is generated only at an inner diameter-side portion of the side surface of the seal ring, twisting occurs in the seal ring such that the inner diameter-side portion moves away from the side surface of the annular groove and the outer diameter-side portion moves closer to the side surface side of the annular groove, and the dynamic pressure generation effect decreases, which is a risk.

The present invention has been made in view of such problems, and an object of the present invention is to provide a seal ring capable of maintaining parallelism between sliding surfaces.

### {Solution to Problem}

In order to solve the foregoing problems, a seal ring according to the present invention is a seal ring including: a sliding surface that rotates and slides relative to one of a shaft and a housing through which the shaft is inserted; and an installation surface that intersects the sliding surface and that is installed on remaining one of the shaft and the housing. The seal ring partitions one space, which is located on a side opposite to a side on which the sliding surface intersects the installation surface, off from another space disposed on the side on which the sliding surface intersects the installation surface. The sliding surface is provided with a dynamic pressure generation mechanism communicating with the one space and including a dynamic pressure generation portion, and a fluid recovery mechanism disposed between the dynamic pressure generation portion and the one space. According to this preferable configuration, of the positive pressure generated in the vicinity of the dynamic pressure generation portion of the dynamic pressure generation mechanism, the pressure on the one space side is released due to pressure difference between the one space and the dynamic pressure generation portion via the fluid recovery mechanism, so that the pressure on the one space side of the sliding surface can be suppressed. In addition, since the periphery of the fluid recovery mechanism is surrounded by a land, the fluid recovery mechanism is less likely to interfere with the dynamic pressure generation mechanism during relative rotation, and is less likely to be affected by the one space during stoppage. Therefore, twisting in which the one space side of the sliding surface moves away from the mating sliding surface and another space side moves closer thereto is less likely to occur, and parallelism between the sliding surfaces can be maintained.

It may be preferable that the fluid recovery mechanism is disposed on a side closer to the one space. According to this preferable configuration, a fluid in the fluid recovery mechanism is easily discharged into the one space.

It may be preferable that a width of a land between the fluid recovery mechanism and the one space is smaller than a width of the fluid recovery mechanism. According to this preferable configuration, the fluid in the fluid recovery mechanism is easily discharged into the one space.

It may be preferable that the fluid recovery mechanism is formed to be long in a circumferential direction. According to this preferable configuration, a flow of the fluid toward a relative rotation downstream side in a circumferential direction is generated in the fluid recovery mechanism, and the fluid between the sliding surfaces is easily recovered due to the flow of the fluid in the fluid recovery mechanism.

It may be preferable that the fluid recovery mechanism is disposed such that an end portion of the fluid recovery mechanism on a relative rotation downstream side is oriented toward the one space. According to this preferable configuration, the fluid in the fluid recovery mechanism is easily discharged into the one space.

It may be preferable that a depth of the fluid recovery mechanism becomes shallower from a relative rotation downstream side toward a relative rotation upstream side. According to this preferable configuration, since a relative negative pressure can be generated in the fluid recovery mechanism on the relative rotation upstream side, the fluid between the sliding surfaces is easily taken in.

It may be preferable that the fluid recovery mechanism is a deep groove. According to this preferable configuration, since a large amount of the fluid between the sliding surfaces can be taken in, the pressure on the one space side of the sliding surface is easily reduced.

It may be preferable that the dynamic pressure generation mechanism is composed of a fluid introduction groove communicating with the one space, and a dynamic pressure generation groove that extends in a circumferential direction from the fluid introduction groove and that is shallower than the fluid introduction groove. According to this preferable configuration, since the sealed fluid can be efficiently introduced into the dynamic pressure generation groove from the fluid introduction groove that is a deep groove, the dynamic pressure generation effect of the dynamic pressure generation portion is enhanced.

It may be preferable that the dynamic pressure generation groove becomes shallower from a relative rotation upstream side toward a relative rotation downstream side. According to this preferable configuration, the dynamic pressure generation effect of the dynamic pressure generation portion is enhanced.

### {BRIEF DESCRIPTION OF DRAWINGS}

FIG. 1 is a schematic cross-sectional view illustrating a shaft sealing device to which a seal ring according to a first embodiment of the present invention is applied.
FIG. 2A is a view of the seal ring when viewed in an axial direction in the first embodiment, FIG. 2B is an enlarged view of a cut portion when viewed in the axial direction in the first embodiment, and FIG. 2C is a view taken in the direction of arrow A of FIG. 2A.
FIG. 3A is an enlarged view of a dynamic pressure generation groove and a fluid recovery groove in the first embodiment when viewed in the axial direction, and FIG. 3B is a cross-sectional view taken along line B-B of FIG. 3A.
FIG. 4 is a schematic cross-sectional view illustrating a state where dynamic pressure is generated by the dynamic pressure generation groove in the first embodiment.
FIG. 5 is an enlarged view of a dynamic pressure generation groove and a fluid recovery groove of a seal ring according to a second embodiment of the present invention when viewed in the axial direction.
FIG. 6 is an enlarged view of a dynamic pressure generation groove and a fluid recovery groove of a seal ring according to a third embodiment of the present invention when viewed in the axial direction.
FIG. 7 is an enlarged view of a dynamic pressure generation groove and a fluid recovery groove of a seal ring according to a fourth embodiment of the present invention when viewed in the axial direction.
FIG. 8 is an enlarged view of a dynamic pressure generation groove and a fluid recovery groove of a seal ring according to a fifth embodiment of the present invention when viewed in the axial direction.
FIG. 9 is an enlarged view of a dynamic pressure generation groove and a fluid recovery groove of a seal ring according to a sixth embodiment of the present invention when viewed in the axial direction.
FIG. 10 is a schematic cross-sectional view illustrating a shaft sealing device to which a seal ring according to a seventh embodiment of the present invention is applied.
FIG. 11 is a schematic cross-sectional view illustrating a shaft sealing device to which a seal ring according to an eighth embodiment of the present invention is applied.
FIG. 12 is an enlarged view of a modification example of the fluid recovery groove in the first embodiment of the present invention when viewed in the axial direction.

### {DESCRIPTION OF EMBODIMENTS}

Modes for implementing a seal ring according to the present invention will be described below based on embodiments.

### {First embodiment}

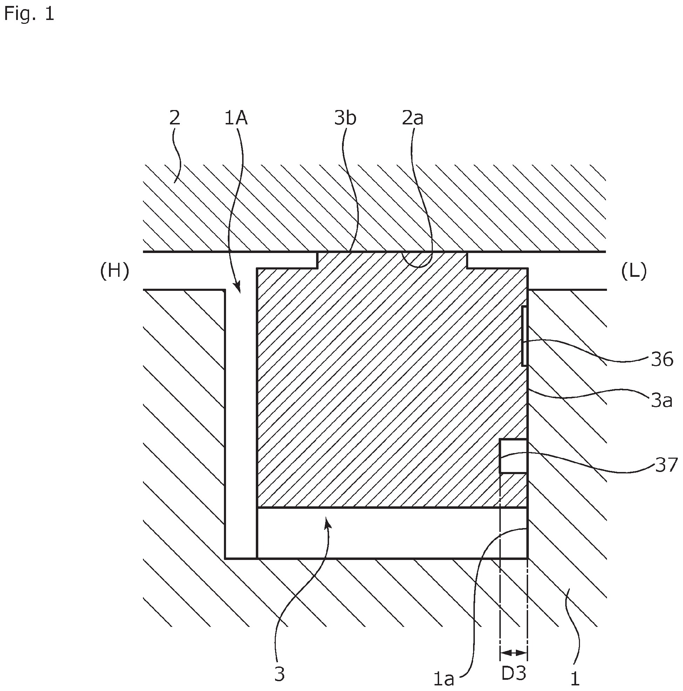

A seal ring according to a first embodiment of the present invention will be described with reference to FIGS. 1 to 4. Incidentally, in the present embodiment, in the following description, the right side of the paper sheet of FIG. 1 represents a right side of the seal ring, and the left side of the paper sheet of FIG. 1 represents a left side of the seal ring. Incidentally, for convenience of description, a dynamic pressure generation groove 36, a fluid recovery groove 37, and the like are illustrated as being larger than the actual dimensions.

A shaft sealing device illustrated in FIG. 1 can be suitably used, for example, in an application for sealing an annular gap between a rotating shaft 1 and a housing 2, which rotate relative to each other, in order to hold hydraulic pressure in a rotating machine. In the present embodiment, a case where the present invention is applied to such an application will be described as an example. Incidentally, FIG. 1 illustrates a state where no dynamic pressure is generated in the dynamic pressure generation groove 36 of a seal ring 3.

The shaft sealing device is mainly composed of the rotating shaft 1 serving as a shaft; the housing 2; and the seal ring 3. The seal ring 3 is loosely fitted into an annular groove 1A having a rectangular cross-section that is provided in the rotating shaft 1.

As will be described later, a right surface 3a of the seal ring 3 serving as a sliding surface slides against a right surface 1a serving as a mating sliding surface constituting the annular groove 1A, and an outer peripheral surface 3b of the seal ring 3 serving as an installation surface is brought into press contact with an inner peripheral surface 2a of the housing 2 serving as an installed surface. Namely, the installation surface and the installed surface only need to be in contact with each other, and for example, in a situation where lubrication of the sliding surfaces is insufficient, such as during start-up of the machine, the installation surface and the installed surface are assembled in a state where sliding therebetween is allowed.

In addition, the right surface 3a of the seal ring 3 includes a portion that comes into contact with the right surface 1a of the annular groove 1A, and a portion disposed closer to an outer diameter side than the right surface 1a of the annular groove 1A, and in the present embodiment, the sliding surface of the seal ring 3 refers to the entirety of the right surface 3a of the seal ring 3. Namely, the sliding surface of the seal ring 3 includes a portion that comes into contact with the right surface 1a of the annular groove 1A, and a portion that is flush with the portion.

In addition, the corner between an outer peripheral surface 3b and the right surface 3a of the seal ring 3 and the corner between the outer peripheral surface 3b and a left surface are cut out to form step portions. Accordingly, the press-contact state between the outer peripheral surface 3b and the inner peripheral surface 2a is easily held. The reason is that the seal ring 3 itself can undergo minute deformation when an external force such as fluid pressure acts on the seal ring 3.

In the present embodiment, the fluid pressure in a region on the left side of FIG. 1 is configured to change, and the seal ring 3 plays a role in holding the fluid pressure in a target sealed region (H) on the left side of the figure. The target sealed region (H) as one space is disposed on the side opposite to the outer peripheral surface 3b with reference to the right surface 3a of the seal ring 3, and a leakage region (L) as the other space is disposed on the outer peripheral surface 3b side with reference to the right surface 3a of the seal ring 3.

Incidentally, although not illustrated, when the machine using the seal ring 3 is in a stopped state, the fluid pressure in the target sealed region (H) is low and is the same as the pressure in the leakage region (L) on the right side of FIG. 1, and when the machine is in an operation state, the fluid pressure in the target sealed region (H) is higher than that in the leakage region (L).

The seal ring 3 is made of a resin material such as polyetheretherketone (PEEK), polyphenylene sulfide (PPS), or polytetrafluoroethylene (PTFE).

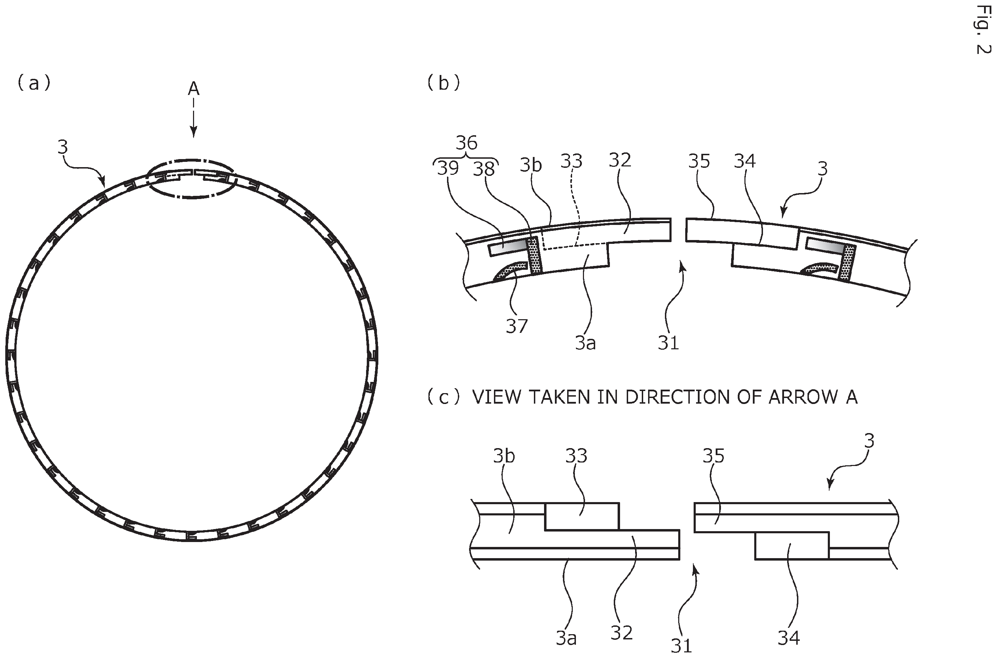

As illustrated in FIGS. 2A to 2C, a cut portion 31 is formed in the seal ring 3 at one location in a circumferential direction. Incidentally, FIG. 2B is an enlarged view of an enclosed portion in FIG. 2A.

The cut portion 31 is a known special step cut that is cut in a stepped shape when viewed from both axial sides (see FIGS. 2A and 2B) and the outer diameter side (see FIG. 2C). Accordingly, in the seal ring 3, a first fitting protrusion 32 and a first fitting recess 33 are provided on the outer peripheral surface side on one circumferential side, and a second fitting recess 34 into which the first fitting protrusion 32 fits and a second fitting protrusion 35 that fits into the first fitting recess 33 are provided on the outer peripheral surface side on the other circumferential side.

Incidentally, the cut portion 31 may be formed not only by cutting through machining but also by molding. In addition, here, a special step cut has been illustrated as one example of the cut portion 31; however, the present invention is not limited thereto, and a known straight cut, bias cut, step cut, or the like can also be employed. Incidentally, when a low elastic material (for example, PTFE or the like) is employed as the material for the seal ring 3, the cut portion may not be provided.

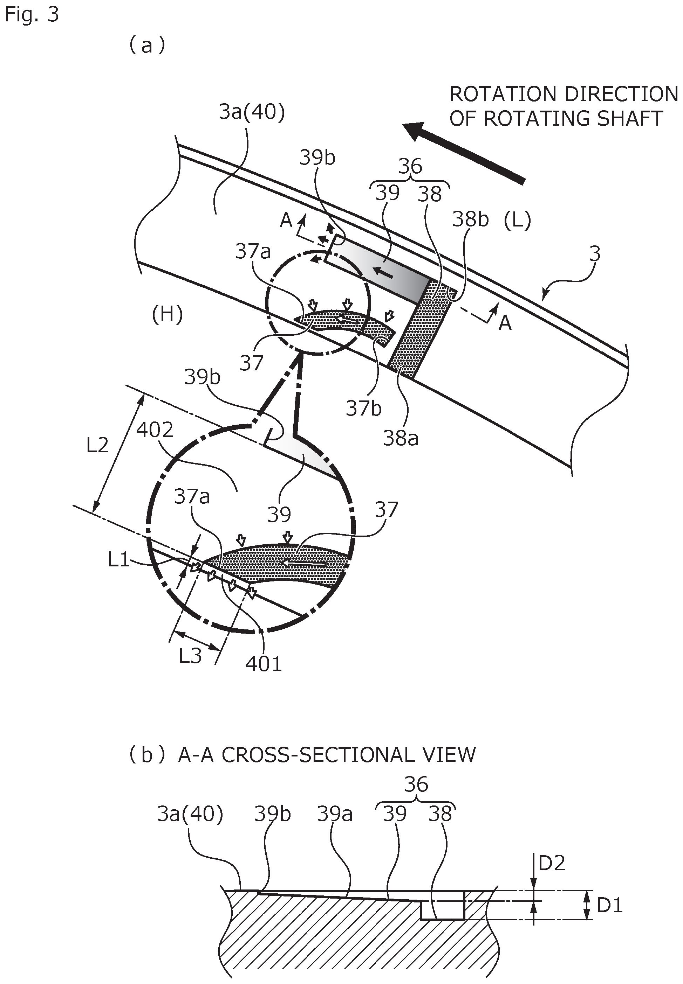

In addition, as illustrated in FIGS. 2B and 3, a plurality of the dynamic pressure generation grooves 36 serving as dynamic pressure generation mechanisms and a plurality of the fluid recovery grooves 37 serving as fluid recovery mechanisms are formed on the right surface 3a of the seal ring 3 in the circumferential direction. In the present embodiment, a plurality of sets of one dynamic pressure generation groove 36 and one fluid recovery groove 37 disposed downstream of the dynamic pressure generation groove 36 in a rotation direction of the rotating shaft 1 are provided on the right surface 3a of the seal ring 3 in the circumferential direction.

Incidentally, the number of the dynamic pressure generation grooves 36 and the fluid recovery grooves 37 can be freely changed. For example, the number of the dynamic pressure generation grooves 36 and the number of the fluid recovery grooves 37 provided on the right surface 3a of the seal ring 3 may be different from each other.

Particularly, as illustrated in FIGS. 3A and 3B, each of the dynamic pressure generation grooves 36 includes a first groove portion 38 serving as a fluid introduction groove and a second groove portion 39 serving as a dynamic pressure generation groove.

The first groove portion 38 extends linearly in a radial direction from an inner diameter end 38a toward an outer diameter end 38b. The inner diameter end 38a communicates with the target sealed region (H). The outer diameter side of the outer diameter end 38b is closed by a land 40.

The second groove portion 39 extends in an arc shape from the outer diameter end 38b side of the first groove portion 38 toward the downstream side in the rotation direction of the rotating shaft 1. The second groove portion 39 is formed such that a circumferential length is longer than a radial groove width.

The second groove portion 39 becomes shallower from an upstream side toward the downstream side in the rotation direction of the rotating shaft 1. In detail, a bottom surface 39a of the second groove portion 39 extends linearly from a side wall portion of the first groove portion 38 to the land 40 (particularly, see FIG. 3B). Incidentally, the bottom surface 39a of the second groove portion 39 may have a stepped shape.

An end portion 39b of the second groove portion 39 is disposed closer to the outer diameter side than the center of the radial width of the right surface 3a of the seal ring 3. In other words, the end portion 39b of the second groove portion 39 serving as a pressure generation portion is disposed toward the outer diameter side of the right surface 3a of the seal ring 3, namely, toward the leakage region (L) side.

As illustrated in FIG. 3B, a depth D1 of the first groove portion 38 is deeper than a depth D2 of the second groove portion 39 (D1 > D2). Specifically, the depth D1 of the first groove portion 38 is approximately 25 times the depth D2 of the second groove portion 39. Incidentally, the depth D2 of the second groove portion 39 here refers to the depth of a deepest portion of the second groove portion 39. In addition, in FIG. 3B, for convenience of description, the depth D2 of the second groove portion 39 is illustrated as being larger than the actual depth.

The fluid recovery groove 37 is provided between the end portion 39b of the second groove portion 39 and the target sealed region (H).

In detail, the fluid recovery groove 37 extends from the inner diameter side toward the outer diameter side while being inclined toward the upstream side in the rotation direction of the rotating shaft 1. In other words, an inner diameter end 37a of the fluid recovery groove 37 as an end portion on the relative rotation downstream side is disposed closer to the inner diameter side than an outer diameter end 37b as an end portion on the relative rotation upstream side, namely, is disposed closer to the target sealed region (H) side.

The fluid recovery groove 37 is formed in an arc shape that is convex toward the outer diameter side when viewed in the axial direction. The fluid recovery groove 37 has a circumferential component larger than a radial component. Incidentally, the fluid recovery groove 37 is not limited to having an arc shape when viewed in the axial direction, and for example, may extend linearly when viewed in the axial direction.

The entire periphery of the fluid recovery groove 37 is closed by the land 40. Namely, the fluid recovery groove 37 does not communicate with the dynamic pressure generation groove 36 and the target sealed region (H).

The outer diameter end 37b of the fluid recovery groove 37 is disposed closer to the inner diameter side than the center of the radial width of the right surface 3a of the seal ring 3. In other words, the outer diameter end 37b of the fluid recovery groove 37 is disposed toward the inner diameter side of the right surface 3a of the seal ring 3, namely, toward the target sealed region (H) side.

A land 401 that partitions the inner diameter end 37a of the fluid recovery groove 37 off from the target sealed region (H) in the radial direction has a radial width L1. In other words, the radial width L1 can also be said to be the shortest distance between the fluid recovery groove 37 and the target sealed region (H).

In addition, a land 402 that partitions the inner diameter end 37a of the fluid recovery groove 37 off from the end portion 39b of the second groove portion 39 in the radial direction has a radial width L2.

The radial width L1 of the land 401 is smaller than the radial width L2 of the land 402 (L1 < L2). Incidentally, in the present embodiment, the radial width L1 is approximately 1/30 times the radial width L2, but can be freely changed. Preferably, the radial width L1 is approximately 1/2 to 1/50 times the radial width L2.

In addition, the radial width L1 of the land 401 is smaller than a groove width L3 of the fluid recovery groove 37 (L1 < L3). Incidentally, in the present embodiment, the radial width L1 is approximately 1/10 times the groove width L3, but can be freely changed. Preferably, the radial width L1 is approximately 1/2 to 1/20 times the radial width L2.

In addition, referring to FIGS. 1 and 3B, a depth D3 of the fluid recovery groove 37 is the same as the depth D1 of the first groove portion 38 (D1 = D3).

Incidentally, in the present embodiment, the depth D1 of the first groove portion 38 and the depth D3 of the fluid recovery groove 37 is approximately 25 times the depth D2 of the second groove portion 39, but may be freely changed, and is preferably approximately 5 to 50 times the depth D2.

In addition, since it is essential for the dynamic pressure generation groove 36 to generate dynamic pressure over a wide radial range of the right surface 3a, as described above, the dynamic pressure generation groove 36 is disposed closer to the outer diameter side than the center of the radial width of the right surface 3a. Meanwhile, since the fluid recovery groove 37 only needs to be able to suppress excessive pressure on the inner diameter side of the right surface 3a, it is sufficient that the fluid recovery groove 37 is disposed closer to the inner diameter side than the dynamic pressure generation groove 36, and as described above, it is even better if the outer diameter end 37b is disposed closer to the inner diameter side than the center of the radial width of the right surface 3a of the seal ring 3.

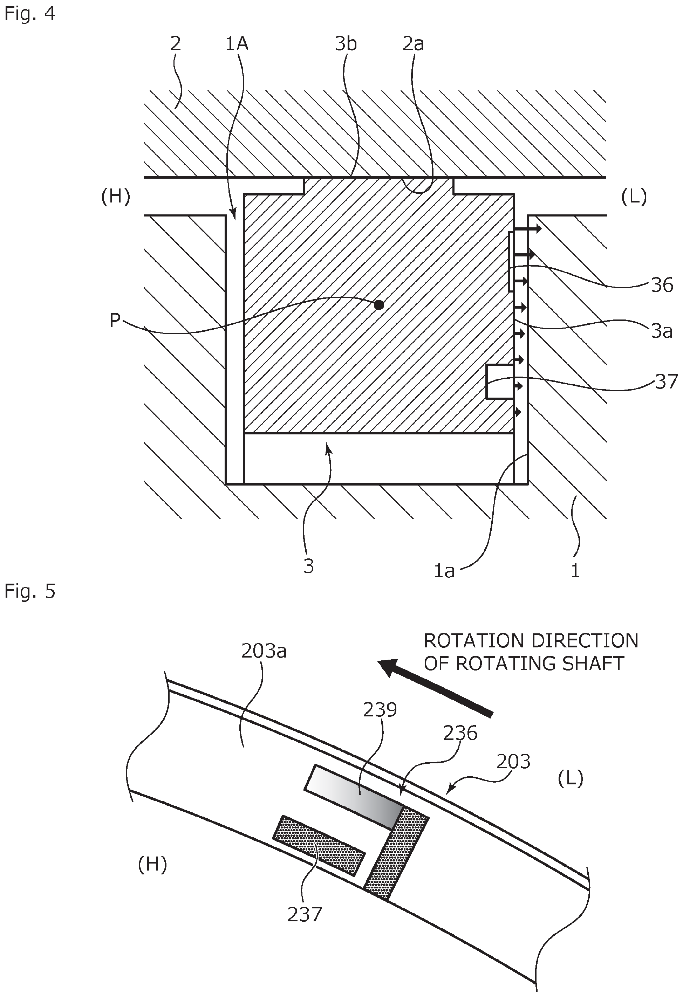

When the right surface 3a of the seal ring 3 and the right surface 1a of the annular groove 1A slide relative to each other, oil in the dynamic pressure generation groove 36 moves toward the end portion 39b of the second groove portion 39, and positive pressure is generated at the end portion 39b and in the vicinity thereof. Accordingly, since the right surface 3a of the seal ring 3 and the right surface 1a of the annular groove 1A are slightly separated from each other (see FIG. 4), and an oil film is formed, the frictional force between the right surface 3a of the seal ring 3 and the right surface 1a of the annular groove 1A can be reduced. Incidentally, the oil is constantly supplied into the second groove portion 39 from the target sealed region (H) through the first groove portion 38.

Meanwhile, the oil in the fluid recovery groove 37 moves from the outer diameter end 37b toward the inner diameter end 37a, and is discharged into the target sealed region (H) across the land 401.

In such a manner, since a flow is generated in the fluid recovery groove 37 from the outer diameter end 37b toward the inner diameter end 37a, and accordingly, the fluid in the vicinity of the fluid recovery groove 37 is recovered, as illustrated in FIG. 4, of the positive pressure generated in the dynamic pressure generation groove 36, the pressure on the inner diameter side, namely, on the target sealed region (H) side, between the right surface 3a of the seal ring 3 and the right surface 1a of the annular groove 1A can be reduced.

Next, the state of the seal ring when the rotating shaft 1 rotates will be described with reference to FIG. 4.

As illustrated in FIG. 1, when the machine is operated, the fluid pressure in the target sealed region (H) becomes higher than that in the leakage region (L), so that the seal ring 3 is subjected to a radial outward force due to the fluid pressure in the target sealed region (H), and the outer peripheral surface 3b of the seal ring 3 is brought into press contact with the inner peripheral surface 2a of the housing 2. Namely, the seal ring 3 is fixed to the housing 2.

In addition, the right surface 3a of the seal ring 3 is brought into press contact with and is slid against the right surface 1a of the annular groove 1A of the rotating shaft 1 by the fluid pressure in the target sealed region (H).

As illustrated in FIG. 4, when the right surface 3a of the seal ring 3 and the right surface 1a of the annular groove 1A slide relative to each other, dynamic pressure is generated by the dynamic pressure generation groove 36, and the right surface 3a of the seal ring 3 and the right surface 1a of the annular groove 1A are slightly separated from each other. Incidentally, in FIG. 4, for convenience of description, the separation width between the right surface 3a of the seal ring 3 and the right surface 1a of the annular groove 1A is illustrated as being larger than the actual width.

The right surface 3a of the seal ring 3 has a larger diameter than the right surface 1a of the annular groove 1A, and the dynamic pressure generation groove 36 is not provided in a portion of the right surface 3a of the seal ring 3, the portion protruding toward the outer diameter side beyond the right surface 1a of the annular groove 1A. Accordingly, a larger dynamic pressure acts on the inner diameter side of the right surface 3a of the seal ring 3 than on the outer diameter side. Namely, a twisting force acts on the seal ring 3 such that the inner diameter side of the right surface 3a of the seal ring 3 moves away from the right surface 1a of the annular groove 1A more than the outer diameter side.

In detail, a force acts on the seal ring 3 to tilt the right surface 3a of the seal ring 3 with respect to the right surface 1a of the annular groove 1A such that an inner diameter-side portion of the seal ring 3 with respect to a center point P of a cross-section thereof moves away from the right surface 1a of the annular groove 1A and an outer diameter-side portion of the seal ring 3 with respect to the center point P moves closer to the right surface 1a of the annular groove 1A.

The fluid recovery groove 37 is provided on the right surface 3a of the seal ring 3 of the first embodiment between the end portion 39b of the second groove portion 39 of the dynamic pressure generation groove 36 and the target sealed region (H). According to this configuration, since, of the positive pressure generated in the vicinity of the end portion 39b of the second groove portion 39, the pressure on the target sealed region (H) is released to the target sealed region (H) via the fluid recovery groove 37, the pressure on the target sealed region (H) side between the right surface 3a of the seal ring 3 and the right surface 1a of the annular groove 1A can be suppressed.

In addition, the radial width L1 of the land 401 is smaller than the radial width L2 of the land 402. In other words, the fluid recovery groove 37 is disposed on the right surface 3a of the seal ring 3 on the side closer to the target sealed region (H). Therefore, the oil in the fluid recovery groove 37 is easily discharged into the target sealed region (H). Accordingly, since the oil in the fluid recovery groove 37 is discharged across the land 401 from the inner diameter end 37a and immediately into the target sealed region (H), dynamic pressure can be less likely to be generated in the vicinity of the inner diameter end 37a.

In addition, since the radial width L1 of the land 401 is smaller than the groove width L3 of the fluid recovery groove 37, the fluid recovery groove 37 is disposed close to the target sealed region (H), and the oil in the fluid recovery groove 37 is more easily discharged into the target sealed region (H).

In addition, the fluid recovery groove 37 has a circumferential component larger than a radial component, namely, is formed to be long in the circumferential direction. Therefore, the fluid recovery groove 37 can recover the fluid between the right surfaces 1a and 3a over a wide circumferential range.

In addition, since the inner diameter end 37a of the fluid recovery groove 37 is disposed closer to the target sealed region (H) side than the outer diameter end 37b, and the oil in the fluid recovery groove 37 flows from the outer diameter end 37b toward the inner diameter end 37a, the oil in the fluid recovery groove 37 can be efficiently discharged into the target sealed region (H).

In addition, since the fluid recovery groove 37 is a deep groove, and the generation of dynamic pressure in the vicinity of the inner diameter end 37a of the fluid recovery groove 37 between the right surface 3a of the seal ring 3 and the right surface 1a of the annular groove 1A can be avoided, the pressure on the target sealed region (H) side can be efficiently reduced. Furthermore, the entirety of the fluid recovery groove 37 can recover the fluid.

In addition, since the dynamic pressure generation groove 36 includes the first groove portion 38 and the second groove portion 39, and the first groove portion 38 is a deep groove, the oil can be efficiently introduced from the first groove portion 38 into the second groove portion 39, and therefore, the dynamic pressure generation effect in the second groove portion 39 is enhanced.

In addition, since the second groove portion 39 become shallower from the upstream side toward the downstream side in the rotation direction of the rotating shaft 1, dynamic pressure can be efficiently generated due to the wedge effect of the second groove portion 39.

In addition, since the periphery of the fluid recovery groove 37 is surrounded by the land 40, namely, the dynamic pressure generation groove 36 and the fluid recovery groove 37 do not communicate with each other, during relative rotation, interference between the flow of the fluid in the dynamic pressure generation groove 36 and the flow of the fluid in the fluid recovery groove 37 can be avoided. Furthermore, during stoppage, the fluid recovery groove 37 is less likely to be affected by the target sealed region (H).

Incidentally, in the present embodiment, a mode in which the dynamic pressure generation grooves 36 and the fluid recovery grooves 37 are provided only on the right surface 3a of the seal ring 3 has been provided as an example; however, the dynamic pressure generation grooves and the fluid recovery grooves may also be provided on the left surface of the seal ring 3. According to this configuration, for example, when the pressure balance between the regions on both sides is reversed from the state illustrated in FIG. 1, the seal ring 3 moves to the left side, and the left surface of the seal ring 3 comes into contact with and slides against a left surface of the annular groove 1A, so that the fluid can be recovered by the fluid recovery grooves on the left side while dynamic pressure is generated in the dynamic pressure generation grooves on the left side. In addition, the seal ring 3 can be assembled regardless of orientation, and the work efficiency can be improved.

In addition, in the present embodiment, a mode in which the depth of the second groove portion 39 of the dynamic pressure generation groove 36 gradually becomes shallower from the relative rotation upstream side toward the relative rotation downstream side has been provided as an example; however, the depth may be constant.

In addition, in the present embodiment, a mode in which the depth of the fluid recovery groove 37 is the same as the depth of the first groove portion 38 of the dynamic pressure generation groove 36 has been provided as an example; however, the depths of the first groove portion 38 and the fluid recovery groove 37 may be different from each other. For example, the fluid recovery groove may be configured as a shallow groove, and during relative rotation, a relative negative pressure may be generated in the fluid recovery groove, thereby enhancing the fluid recovery effect of the fluid recovery groove.

### {Second embodiment}

Next, a seal ring according to a second embodiment of the present invention will be described with reference to FIG. 5. Incidentally, the description of configurations that are the same as and overlap with the configurations of the first embodiment will be omitted.

As illustrated in FIG. 5, a dynamic pressure generation groove 236 and a fluid recovery groove 237 are provided on a right surface 203a of a seal ring 203 of the second embodiment. The dynamic pressure generation groove 236 has the same configuration as the dynamic pressure generation groove 36 of the first embodiment.

The fluid recovery groove 237 extends in the circumferential direction substantially parallel to an inner peripheral surface of the seal ring 203. The fluid recovery groove 237 is disposed toward the target sealed region (H) side between a second groove portion 239 of the dynamic pressure generation groove 236 and the target sealed region (H) .

According to this configuration, since the fluid recovery groove 237 is in proximity to the target sealed region (H) over a wide circumferential range, the fluid in the fluid recovery groove 237 is easily discharged to the target sealed region (H) side.

Incidentally, in the present embodiment, a mode in which the fluid recovery groove 237 is disposed parallel to the circumferential direction has been provided as an example; however, the fluid recovery groove 237 may be disposed to be inclined or deformed such that an end portion of the fluid recovery groove 237 on the relative rotation downstream side is in proximity to the target sealed region (H). According to this configuration, the direction in which the fluid flows can be directed toward the target sealed region (H), and the recovery and discharge of the fluid can be more efficiently performed.

### {Third embodiment}

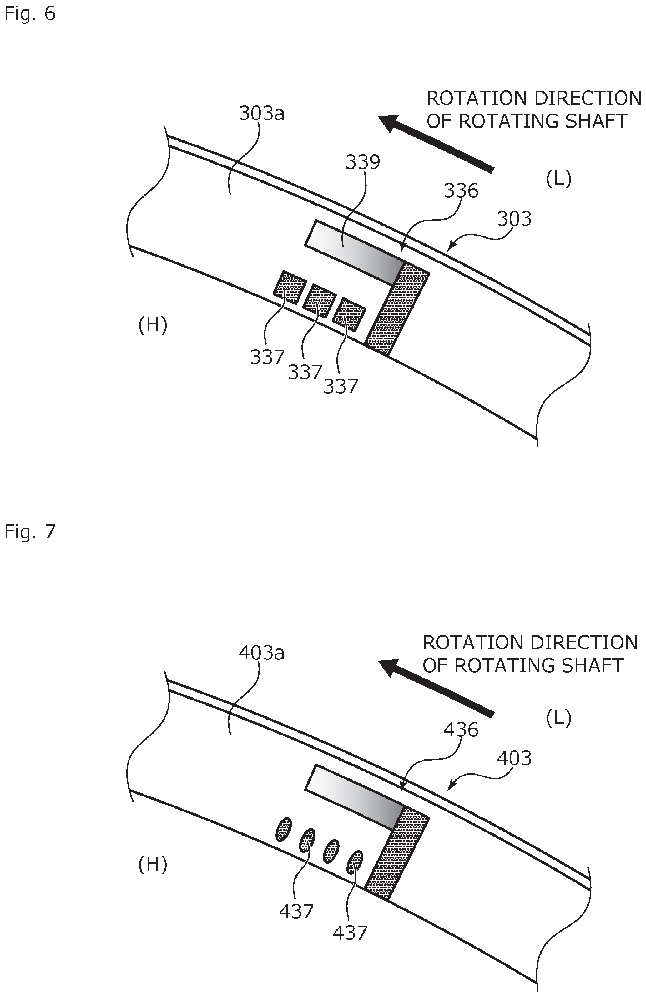

Next, a seal ring according to a third embodiment of the present invention will be described with reference to FIG. 6. Incidentally, the description of configurations that are the same as and overlap with the configurations of the first embodiment will be omitted.

As illustrated in FIG. 6, a dynamic pressure generation groove 336 and a fluid recovery groove 337 are provided on a right surface 303a of a seal ring 303 of the third embodiment. The dynamic pressure generation groove 336 has the same configuration as the dynamic pressure generation groove 36 of the first embodiment.

The fluid recovery groove 337 has a rectangular shape when viewed in the axial direction. A plurality (three in the third embodiment) of the fluid recovery grooves 337 are disposed toward the target sealed region (H) side in the circumferential direction between a second groove portion 339 of the dynamic pressure generation groove 336 and the target sealed region (H).

In such a manner, the plurality of fluid recovery grooves 337 may be provided for one dynamic pressure generation groove 336.

Incidentally, in the present embodiment, a mode in which the plurality of fluid recovery grooves 337 are provided parallel to the circumferential direction has been provided as an example; however, the fluid recovery grooves 337 may be disposed to be inclined or in a stepped shape such that end portions of the fluid recovery grooves 337 on the relative rotation downstream side are in proximity to the target sealed region (H). According to this configuration, the direction in which the fluid flows can be directed toward the target sealed region (H), and the recovery and discharge of the fluid can be more efficiently performed.

### {Fourth embodiment}

Next, a seal ring according to a fourth embodiment of the present invention will be described with reference to FIG. 7. Incidentally, the description of configurations that are the same as and overlap with the configurations of the third embodiment will be omitted.

As illustrated in FIG. 7, a plurality (four in the fourth embodiment) of fluid recovery grooves 437 are provided for one dynamic pressure generation groove 436 on a right surface 403a of a seal ring 403 of the fourth embodiment.

The fluid recovery grooves 437 of the fourth embodiment have an elliptical shape that is long in the radial direction when viewed in the axial direction.

In such a manner, the shape of the fluid recovery grooves 437 can be freely changed. Incidentally, the fluid recovery grooves are not limited to having an elliptical shape, and may have a circular shape or the like.

Incidentally, in the present embodiment, a mode in which the plurality of fluid recovery grooves 437 are provided parallel to the circumferential direction has been provided as an example; however, the fluid recovery grooves 437 may be disposed to be inclined or in a stepped shape such that end portions of the fluid recovery grooves 437 on the relative rotation downstream side are in proximity to the target sealed region (H). According to this configuration, the direction in which the fluid flows can be directed toward the target sealed region (H), and the recovery and discharge of the fluid can be more efficiently performed.

### {Fifth embodiment}

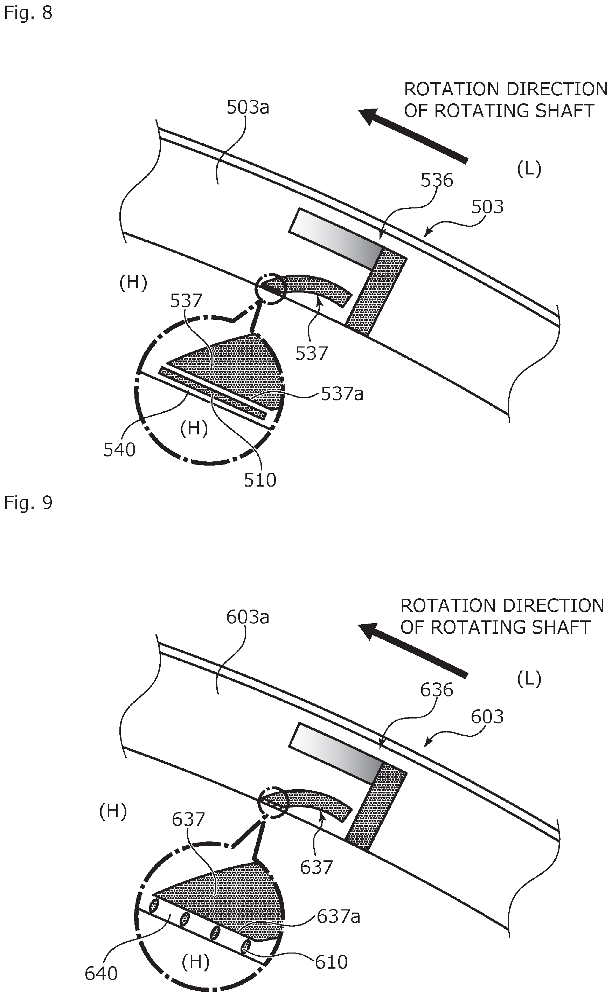

Next, a seal ring according to a fifth embodiment of the present invention will be described with reference to FIG. 8. Incidentally, the description of configurations that are the same as and overlap with the configurations of the first embodiment will be omitted.

As illustrated in FIG. 8, a dynamic pressure generation groove 536 and a fluid recovery groove 537 are provided on a right surface 503a of a seal ring 503 of the fifth embodiment. The dynamic pressure generation groove 536 and the fluid recovery groove 537 have the same configurations as the dynamic pressure generation groove 36 and the fluid recovery groove 37 of the first embodiment.

A narrow groove 510 extending in the circumferential direction is provided in a land 540 between an inner diameter end 537a of the fluid recovery groove 537 on the right surface 503a of the seal ring 503 and the target sealed region (H). The fluid is easily discharged to the target sealed region (H) side by the narrow groove 510 provided between the inner diameter end 537a of the fluid recovery groove 537 and the target sealed region (H).

In such a manner, even when the narrow groove 510 is provided between the inner diameter end 537a of the fluid recovery groove 537 and the target sealed region (H), the inner diameter end 537a of the fluid recovery groove 537 and the target sealed region (H) are partitioned off from each other by the remaining land 540, and therefore, the fluid recovery groove 537 and the target sealed region (H) do not communicate with each other.

### {Sixth embodiment}

Next, a seal ring according to a sixth embodiment of the present invention will be described with reference to FIG. 9. Incidentally, the description of configurations that are the same as and overlap with the configurations of the first embodiment will be omitted.

As illustrated in FIG. 9, a dynamic pressure generation groove 636 and a fluid recovery groove 637 are provided on a right surface 603a of a seal ring 603 of the sixth embodiment. The dynamic pressure generation groove 636 and the fluid recovery groove 637 have the same configurations as the dynamic pressure generation groove 36 and the fluid recovery groove 37 of the first embodiment.

A plurality of dimples 610 are provided in a land 640 between an inner diameter end 637a of the fluid recovery groove 637 on the right surface 603a of the seal ring 603 and the target sealed region (H). The fluid is easily discharged to the target sealed region (H) side by the plurality of dimples 610 provided between the inner diameter end 637a of the fluid recovery groove 637 and the target sealed region (H) .

In such a manner, even when the dimples 610 are provided between the inner diameter end 637a of the fluid recovery groove 637 and the target sealed region (H), the inner diameter end 637a of the fluid recovery groove 637 and the target sealed region (H) are partitioned off from each other by the remaining land 640, and therefore, the fluid recovery groove 637 and the target sealed region (H) do not communicate with each other.

Namely, the fluid recovery groove 637 and the target sealed region (H) only need not to communicate with each other via the dimples 610.

### {Seventh embodiment}

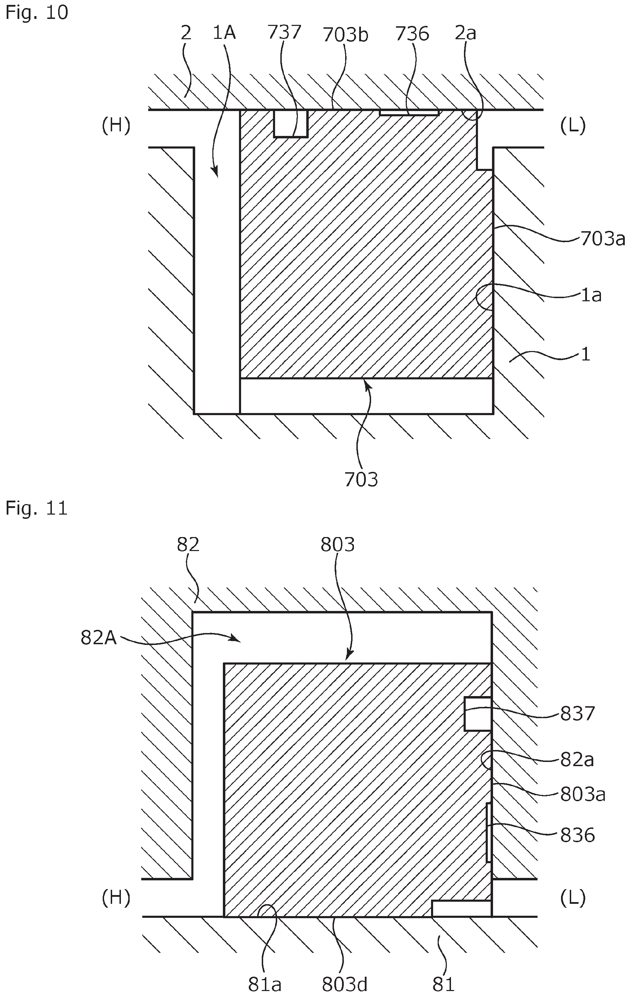

Next, a seal ring according to a seventh embodiment of the present invention will be described with reference to FIG. 10. Incidentally, the description of configurations that are the same as and overlap with the configurations of the first embodiment will be omitted.

As illustrated in FIG. 10, in a seal ring 703 of the seventh embodiment, a right surface 703a serving as an installation surface is brought into press contact with the right surface 1a of the annular groove 1A of the rotating shaft 1 by fluid pressure, and the seal ring 703 rotates together with the rotating shaft 1.

In the seal ring 703, a dynamic pressure generation groove 736 and a fluid recovery groove 737 are formed on an outer peripheral surface 703b serving as a sliding surface. The dynamic pressure generation groove 736 and the fluid recovery groove 737 communicate with the target sealed region (H) opposite to the right surface 703a on the outer peripheral surface 703b.

When the seal ring 703 rotates together with the rotating shaft 1, the outer peripheral surface 703b of the seal ring 703 and the inner peripheral surface 2a of the housing 2 slide against each other, dynamic pressure is generated in the dynamic pressure generation groove 736, the outer peripheral surface 703b of the seal ring 703 and the inner peripheral surface 2a of the housing 2 are separated from each other, and an oil film is formed.

At this time, since the fluid between the outer peripheral surface 703b of the seal ring 703 and the inner peripheral surface 2a of the housing 2 is recovered by the fluid recovery groove 737 located closer to the target sealed region (H) side than the dynamic pressure generation groove 736, and the pressure on the target sealed region (H) side decreases, tilting between the outer peripheral surface 703b of the seal ring 703 and the inner peripheral surface 2a of the housing 2 can be suppressed.

### {Eighth embodiment}

Next, a seal ring according to an eighth embodiment of the present invention will be described with reference to FIG. 11. Incidentally, the description of configurations that are the same as and overlap with the configurations of the first embodiment will be omitted.

As illustrated in FIG. 11, in a shaft sealing device of the eighth embodiment, an annular groove 82A is formed in a housing 82, and a seal ring 803 is disposed in the annular groove 82A. Incidentally, an outer peripheral surface 81a of a rotating shaft 81 extends flat in the axial direction.

An inner peripheral surface 803d of the seal ring 803 serving as an installation surface is brought into press contact with the outer peripheral surface 81a of the rotating shaft 81 by fluid pressure, and the seal ring 803 rotates together with the rotating shaft 81.

In addition, a right surface 803a of the seal ring 803 serving as a sliding surface is brought into contact with a right surface 82a of the annular groove 82A by fluid pressure, and is slidable relative to the right surface 82a.

A dynamic pressure generation groove 836 and a fluid recovery groove 837 are formed on the right surface 803a of the seal ring 803. The dynamic pressure generation groove 836 and the fluid recovery groove 837 communicate with the target sealed region (H) opposite to the inner peripheral surface 803d on the right surface 803a.

When the seal ring 803 rotates together with the rotating shaft 81, the right surface 803a of the seal ring 803 and the right surface 82a of the annular groove 82A slide against each other, dynamic pressure is generated in the dynamic pressure generation groove 836, the right surface 803a of the seal ring 803 and the right surface 82a of the annular groove 82A are separated from each other, and an oil film is formed.

At this time, since the fluid between the right surface 803a of the seal ring 803 and the right surface 82a of the annular groove 82A is recovered by the fluid recovery groove 837 located closer to the target sealed region (H) side than the dynamic pressure generation groove 836, and the pressure on the target sealed region (H) side decreases, tilting between the right surface 803a of the seal ring 803 and the right surface 82a of the annular groove 82A can be suppressed.

The embodiments of the present invention have been described above with reference to the drawings; however, the specific configurations are not limited to these embodiments, and modifications or additions that are made without departing from the scope of the present invention are also included in the present invention.

For example, in the first to eighth embodiments, a mode in which the sliding surface and the installation surface of the seal ring are perpendicular to each other has been provided as an example; however, the sliding surface and the installation surface are not limited to being perpendicular to each other as long as the sliding surface and the installation surface extend in directions intersecting each other.

In addition, in the first to eighth embodiments, a mode in which the shaft rotates with respect to the housing has been provided as an example; however, the housing may rotate with respect to the shaft, or the shaft and the housing rotate together in a relative rotation direction.

In addition, in the first, second, fifth, and sixth embodiments, a mode in which the fluid recovery mechanism has a circumferential component larger than a radial component has been provided as an example; however, the radial component may be larger than the circumferential component.

In addition, in the first to eighth embodiments, a mode in which the dynamic pressure generation mechanism is composed of a fluid introduction groove and a dynamic pressure generation groove has been provided as an example; however, the dynamic pressure generation mechanism may be, for example, a spiral groove or the like.

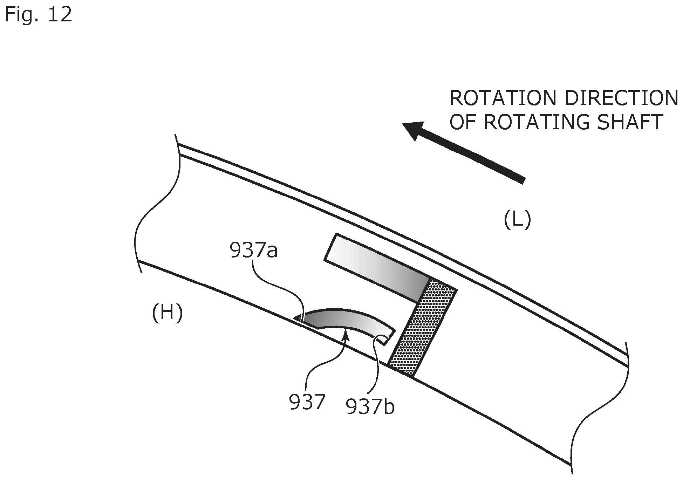

In addition, in the first to eighth embodiments, a mode in which the depth of the fluid recovery mechanism is constant has been provided as an example; however, the depth may vary. For example, as illustrated in FIG. 12, a fluid recovery groove 937 may gradually become shallower from an inner diameter end 937a toward an outer diameter end 937b. According to this configuration, since a relative negative pressure can be generated at the outer diameter end 937b of the fluid recovery groove 937 on the relative rotation upstream side, the fluid between the sliding surfaces is easily taken in. In addition, since the inner diameter end 937a of the fluid recovery groove 937 is a deep groove, dynamic pressure is less likely to be generated in the vicinity of the inner diameter end 937a.

### {REFERENCE SIGNS LIST}

- 1: Rotating shaft (shaft)
- 1A: Annular groove
- 1a: Right surface (counter-sliding surface)
- 2: Housing
- 2a: Inner peripheral surface (installed surface)
- 3: Seal ring
- 3a: Right surface (sliding surface)
- 3b: Outer peripheral surface (installation surface)
- 36: Dynamic pressure generation groove (dynamic pressure generation mechanism)
- 37: Fluid recovery groove (fluid recovery mechanism)
- 37a: Inner diameter end (end portion on relative rotation downstream side)
- 37b: Outer diameter end (end portion on relative rotation upstream side)
- 38: First groove portion (fluid introduction groove)
- 39: Second groove portion (dynamic pressure generation groove)
- 39b: End portion (dynamic pressure generation portion)
- 40: Land
- 401: Land
- 402: Land

## Claims

1. A seal ring, comprising:
a sliding surface that rotates and slides relative to one of a shaft and a housing through which the shaft is inserted; and
an installation surface that intersects the sliding surface and that is installed on remaining one of the shaft and the housing,
wherein the seal ring partitions one space, which is located on a side opposite to a side on which the sliding surface intersects the installation surface, off from another space disposed on the side on which the sliding surface intersects the installation surface, and
the sliding surface is provided with a dynamic pressure generation mechanism communicating with the one space and including a dynamic pressure generation portion, and a fluid recovery mechanism disposed between the dynamic pressure generation portion and the one space.

2. The seal ring according to claim 1,
wherein the fluid recovery mechanism is disposed on a side closer to the one space.

3. The seal ring according to claim 1,
wherein a width of a land between the fluid recovery mechanism and the one space is smaller than a width of the fluid recovery mechanism.

4. The seal ring according to claim 1,
wherein the fluid recovery mechanism is formed to be long in a circumferential direction.

5. The seal ring according to claim 1,
wherein the fluid recovery mechanism is disposed such that an end portion of the fluid recovery mechanism on a relative rotation downstream side is oriented toward the one space.

6. The seal ring according to claim 1,
wherein a depth of the fluid recovery mechanism becomes shallower from a relative rotation downstream side toward a relative rotation upstream side.

7. The seal ring according to claim 1,
wherein the fluid recovery mechanism is a deep groove.

8. The seal ring according to any one of claims 1 to 7,
wherein the dynamic pressure generation mechanism is composed of a fluid introduction groove communicating with the one space, and a dynamic pressure generation groove that extends in a circumferential direction from the fluid introduction groove and that is shallower than the fluid introduction groove.

9. The seal ring according to claim 8,
wherein the dynamic pressure generation groove becomes shallower from a relative rotation upstream side toward a relative rotation downstream side.
